# EUROPÄISCHE PATENTSCHRIFT

(11) **EP 2 493 722 B1**
(45) Veröffentlichungstag und Bekanntmachung des Hinweises auf die Patenterteilung: **12.07.2017**
(21) Anmeldenummer: 11700926.6
(22) Anmeldetag: 17.01.2011
(51) Int. Cl.: B60Q 1/14

(54) **LEUCHTENANORDNUNG**
LUMINAIRE ASSEMBLY
DISPOSITIF D'ÉCLAIRAGE

(30) Priorität: 27.01.2010 DE 102010001255
(43) Veröffentlichungstag der Anmeldung: 05.09.2012
(73) Patentinhaber: OSRAM GmbH, 80807 München (DE)
(72) Erfinder: KAPS, Harald, 86441 Zusmarshausen (DE); WITTMANN, Klaus, 89567 Sontheim (DE); HERING, Oliver, 89168 Niederstotzingen (DE); HELBIG, Peter, 89567 Sontheim (DE)
(86) Internationale Anmeldenummer: PCT/EP2011/050512
(87) Internationale Veröffentlichungsnummer: WO 2011/092066

(56) Entgegenhaltungen:
- EP-A1- 1 195 295
- EP-A1- 1 566 990
- EP-A1- 2 093 104
- EP-A1- 2 289 737
- FR-A1- 2 526 258

## Beschreibung

### Technisches Gebiet

Die Erfindung geht aus von einer Leuchtenanordnung gemäß dem Oberbegriff des Patentanspruchs 1.

### Stand der Technik

Dokument DE 10 2006 057 748 A1 offenbart eine derartige Leuchtenanordnung, die für einen Fahrzeugscheinwerfer eingesetzt wird. Hierbei handelt es sich um einen Bi-Halogen-Scheinwerfer mit dem ein Abblendlicht und ein Fernlicht aus einer einzigen Lichtquelle erzeugt werden. Bei Betätigung des Fernlichts eines Fahrzeugs wird eine Blende mittels einer Magnetkraft aus einem Strahlengang der Lichtquelle bewegt, um einen größeren Bereich des Strahlengangs freizugeben. Umgekehrt beim Umschalten vom Fernlicht zum Abblendlicht wird die Blende in den Strahlengang hinein bewegt. Beim Umschalten zwischen Fern- und Abblendlicht bleiben Lichtfarbe und Lichtintensität im Wesentlichen unverändert. Für einen derartigen Bi-Halogen-Scheinwerfer wird beispielsweise eine H7- oder H9-Halogenlampe als Lichtquelle eingesetzt. Alternativ kann als Lichtquelle eine Xenonlampe verwendet werden.

Derartige Fahrzeugscheinwerfer weisen beim Abblendlicht eine wesentlich höhere Abschattung als herkömmliche Fahrzeugscheinwerfer auf, weswegen die Halogenlampe einen höheren Lichtstrom benötigt, um beispielsweise notwendige gesetzliche Regelungen für die Lichtverteilung des Fahrzeugscheinwerfers zu erfüllen. Der höhere Lichtstrom kann beispielsweise durch eine leistungsfähigere Halogenlampe erreicht werden, die allerdings im Vergleich zu einer leistungsschwächeren Halogenlampe vorrichtungstechnisch aufwändiger ausgestaltet ist und mehr Energie benötigt. Alternativ kann auch eine herkömmliche Halogenlampe mit einer erhöhten Leistung eingesetzt werden, was nachteilig zu einer geringeren Lebensdauer führt. Eine gattungsgemäße Leuchtenanordnung ist aus EP 2 093 104 bekannt.

### Darstellung der Erfindung

Die Aufgabe der vorliegenden Erfindung ist es, eine Leuchtenanordnung in Form eines Bi-Halogen-Scheinwerfers für ein Kraftfahrzeug mit einer hohen Lebensdauer und geringem vorrichtungstechnischen Aufwand zu schaffen. Diese Aufgabe wird gelöst durch eine Leuchtenanordnung gemäß den Merkmalen des Patentanspruchs 1.

Erfindungsgemäß hat eine Leuchtenanordnung für einen Scheinwerfer eines Kraftfahrzeugs zumindest eine Lichtquelle. Bei der Leuchtenanordnung handelt es sich um einen Bi-Halogen-Scheinwerfer. Die Lichtquelle weist zumindest zwei Leuchtfunktionen auf und hat bei der jeweiligen Leuchtfunktion jeweils eine andere Betriebsspannung.

Es hat sich in Versuchen herausgestellt, dass sich hierdurch die Lebensdauer der Leuchtenanordnung mit geringem vorrichtungstechnischem Aufwand wesentlich erhöhen kann. Außerdem wird bei einer niedrigeren Betriebsspannung Energie gespart.

Besonders vorteilhafte Ausgestaltungen finden sich in den abhängigen Ansprüchen. Die eine Leuchtfunktion der Lichtquelle ist ein bei Scheinwerfern für Kraftfahrzeuge übliches Abblendlicht und die andere ein Fernlicht.
Vorzugsweise ist eine bewegbare Blende vorgesehen, die zum Umschalten zwischen dem Abblend- und dem Fernlicht aus einem von der Lichtquelle erzeugten Lichtgang hinein- oder hinausbewegbar ist.

Eine wesentliche Lebensdauerverlängerung der Leuchtenanordnung ist ermöglicht, wenn zumindest eine der Leuchtfunktionen bei einer etwa 5 bis 10 % gegenüber der Standardbetriebsspannung reduzierten Betriebsspannung der Lichtquelle erfolgt. Eine Erhöhung der Betriebsspannung für zumindest eine Leuchtfunktion um 5 bis 10 % gegenüber der Standardbetriebsspannung ermöglicht eine verbesserte Lichtperformance aufgrund der Steigerung der Leuchtemission.

Die Leuchtenanordnung kann ein Adaptive Frontlighting System (AFS)sein.

In weiterer Ausgestaltung der Erfindung hat die Leuchtenanordnung eine Mehrzahl von Lichtquellen mit jeweils einer oder mehrer Leuchtfunktionen. Zur Verlängerung der Lebensdauer ist zumindest eine Lichtquelle vorgesehen, bei der die Leuchtfunktionen durch unterschiedliche Betriebsspannungen der Lichtquelle umgesetzt sind.

Eine Standardbetriebsspannung der Leuchtenanordnung kann 13,2 Volt betragen, wobei die Betriebsspannung für das Abblendlicht dann etwa 13,6 Volt und für das Fernlicht etwa 11,9 Volt oder etwa 12,2 Volt beträgt.

Eine hohe Lebensdauerverlängerung ergibt sich auch bei einer Betriebsspannung für das Abblendlicht von etwa 12,2 Volt und für das Fernlicht von etwa 13,6 Volt, bei einer herkömmlichen Standardbetriebsspannung von 13,2 Volt.

Die vorgenannten Werte für Standardbetriebsspannung, Betriebsspannung von Abblendlicht und Fernlicht sind vorteilhaft für eine Leuchtenanordnung, die an einer Bordnetzspannung von nominal 12 Volt, wie beispielsweise in einem Personenkraftwagen, betrieben wird. Für eine Leuchtenanordnung, die an einer Bordnetzspannung von nominal 24 Volt, wie beispielsweise in Lastkraftwagen üblich, betrieben wird, kann die Standardbetriebsspannung 28 Volt betragen. Die Betriebsspannung der Lichtquelle ist auch in diesem Fall für die jeweilige Leuchtfunktionen um einen Wert im Bereich von größer als 5 Prozent bis kleiner oder gleich 10 Prozent, gegenüber der Standardbetriebsspannung reduziert oder erhöht.

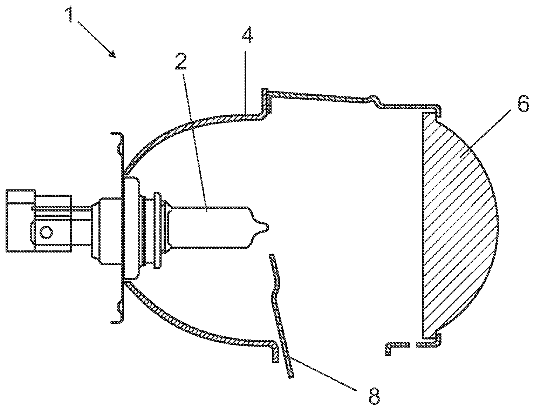

### Kurze Beschreibung der Zeichnung

Im Folgenden soll die Erfindung anhand eines Ausführungsbeispiels näher erläutert werden. Die einzige Figur zeigt in einer schematischen Darstellung eine Leuchtenanordnung.

### Bevorzugte Ausführung der Erfindung

Die einzige Figur zeigt eine Leuchtenanordnung 1 gemäß einem Ausführungsbeispiel in einer stark vereinfachten schematischen Darstellung. Hierbei handelt es sich um einen Bi-Halogen-Scheinwerfer für ein Kraftfahrzeug. Derartige Scheinwerfer erzeugen ein Abblend- und ein Fernlicht aus einer einzigen Lichtquelle. In der dargestellten Figur handelt es sich hierbei um eine H7-Halogenglühlampe, die im Folgenden als Lampe 2 bezeichnet ist. Die H7-Halogenglühlampe besitzt nur eine Glühwendel, die als Lichtquelle zum Erzeugen des Fernlichts und auch des Abblendlichts dient.

Die Leuchtenanordnung 1 hat einen die Lampe 2 umgreifenden Reflektor 4 und einen in einem Strahlengang liegende Projektionslinse 6.

Durch eine zwischen der Projektionslinse 6 und der Lampe 2 angeordneten Blende 8 kann zwischen den Leuchtfunktionen Abblend- und Fernlicht umgeschaltet werden. Die Leuchtfunktionen Abblend- und Fernlicht unterscheiden sich somit dadurch, dass ein Querschnitt des Strahlengangs beim Fernlicht größer als beim Abblendlicht ist. Zur Veränderung des Querschnitts des Strahlengangs dient die Blende 8, die beispielsweise mit einer Magnetkraft eines Elektromagneten, in den Strahlengang hinein und hinausbewegbar ist. Bei Veränderung des Querschnitts des Strahlengangs bleiben Lichtfarbe und Lichtintensität der Strahlung weitgehend unverändert.

Bei der in Figur gezeigten Leuchtenanordnung 1 sind Abschattungen des Abblendlichts höher als bei herkömmlichen Fahrzeugscheinwerfern, die jeweils eine Lichtquelle für Abblend- und Fernlicht aufweisen. Durch eine Erhöhung der Betriebsspannung gegenüber der Standardbetriebsspannung der Lampe 2, die beispielsweise bei 13,2 Volt liegt, wenn diese mit der Leuchtfunktion Abblendlicht eingesetzt ist, wird die Lichtemission erhöht. Hierdurch kann die Leuchtenanordnung 1 beim Abblendlicht trotz erhöhter Abschattung die Leuchteigenschaften des herkömmlichen Fahrzeugscheinwerfers erreichen bzw. annähernd erreichen. Eine hierdurch verringerte Lebensdauer kann bei einer geeigneten Wahl einer Betriebsspannung für die Leuchtfunktion Fernlicht kompensiert werden.

In Versuchen hat sich gezeigt, dass die Lebensdauer der Leuchtenanordnung 1 sogar erhöht werden kann, wenn diese bei einer Leuchtfunktion mit im Vergleich zur Standardbetriebsspannung erhöhter und bei einer anderen Leuchtfunktion mit gesenkter Betriebsspannung eingesetzt ist.

Im Folgenden sind hierzu einige vorteilhafte Konfigurationen für die unterschiedlichen Betriebsspannungen der Leuchtfunktionen dargestellt, wobei die Standardbetriebsspannung der Lampe 2 13,2 Volt beträgt. Ein in den untenstehenden Tabellen abgebildeter Schaltanteil stellt das Verhältnis der Betriebsdauer der Leuchtfunktionen dar.
a)

| | **Spannung** | **Lichtstrom** | **Schaltanteil** |
|---|---|---|---|
| **Fernlicht** | 11,9 Volt | -30% | 1 |
| **Abblendlicht** | 13,6 Volt | 11% | 2 |

Das Fernlicht wird somit mit einer verminderten Betriebspannung bei etwa 33% der Betriebsdauer der Lampe 2 eingesetzt, während das Abblendlicht bei einer erhöhten Betriebsspannung etwa bei 66% der Betriebsdauer eingesetzt wird. Diese Konfiguration führt zu einer Verlängerung der Gesamtlebensdauer von etwa 50% gegenüber einem herkömmlichen Einsatz der Lampe 2 bei 13,2 Volt Standardbetriebsspannung.
b)

| | **Spannung** | **Lichtstrom** | **Schaltanteil** |
|---|---|---|---|
| **Fernlicht** | 11,9 Volt | -30% | 1 |
| **Abblendlicht** | 13,6 Volt | 11% | 5 |

Im Gegensatz zur Konfiguration unter a) ist hier der Schaltanteil des Abblendlichts wesentlich erhöht und liegt bei etwa 83%. Diese Konfiguration führt dennoch zu einer Verlängerung der Gesamtlebensdauer von etwa 12% gegenüber einem herkömmlichen Einsatz der Lampe 2 bei 13,2 Volt Standardbetriebsspannung.
c)

| | **Spannung** | **Lichtstrom** | **Schaltanteil** |
|---|---|---|---|
| **Fernlicht** | 12,2 Volt | -24% | 1 |
| **Abblendlicht** | 13,6 Volt | 11% | 2 |

Das Fernlicht wird gegenüber a) und b) mit einer erhöhten Spannung eingesetzt, wodurch der Lichtstrom steigt. Die Gesamtlebensdauer der Lampe 2 beträgt hierbei etwa 27% gegenüber einem herkömmlichen Einsatz der Lampe 2 bei 13,2 Volt Standardbetriebsspannung.
d)

| | **Spannung** | **Lichtstrom** | **Schaltanteil** |
|---|---|---|---|
| **Fernlicht** | 12,2 Volt | -24% | 1 |
| **Abblendlicht** | 13,6 Volt | 11% | 5 |

In dieser Konfiguration ist der Schaltanteil des Abblendlichts gegenüber c) erhöht. Die Gesamtlebensdauer entspricht der bei einem herkömmlichen Einsatz der Lampe 2 bei 13,2 Volt Standardbetriebsspannung.

Ist der Lichtstrom der Lampe 2 mit der Leuchtfunktion des Abblendlichts bei einer herkömmlichen Standardbetriebsspannung ausreichend, so ist es denkbar die Betriebsspannung der Lampe 2 mit der Leuchtfunktion des Abblendlichts beizubehalten oder sogar zu reduzieren und die Betriebsspannung mit der Leuchtfunktion des Fernlichts für eine größere Reichweite zu erhöhen. Hierzu sind im Folgenden einige vorteilhafte Konfigurationen für die unterschiedlichen Betriebsspannungen der Leuchtfunktionen dargestellt, wobei die Standardbetriebsspannung der Lampe 2 13,2 Volt beträgt.
e)

| | **Spannung** | **Lichtstrom** | **Schaltanteil** |
|---|---|---|---|
| **Fernlicht** | 13,6 Volt | 11% | 1 |
| **Abblendlicht** | 12,2 Volt | -24% | 2 |

Die Gesamtlebensdauer der Lampe 2 in dieser Konfiguration der Betriebsspannungen erhöht sich etwa um 80%.
f)

| | **Spannung** | **Lichtstrom** | **Schaltanteil** |
|---|---|---|---|
| **Fernlicht** | 13,6 Volt | 11% | 1 |
| **Abblendlicht** | 12,2 Volt | -24% | 5 |

In dieser Konfiguration erhöht sich die Gesamtlebensdauer um 110%.

Die Leuchtenanordnung 1 ist nicht auf die Leuchtfunktionen Abblend- und Fernlicht beschränkt, sondern kann beliebig komplex beispielsweise in einem Adaptive-Frontlighting-System (AFS) eingesetzt werden und auf jede einzelne Leuchtfunktion und deren Lichtstromanforderung angewendet werden.

Offenbart ist eine Leuchtenanordnung in Form eines Bi-Halogen-Scheinwerfers für ein Kraftfahrzeug. Dieser hat eine Lichtquelle, die zumindest zwei Leuchtfunktionen aufweist. Die Betriebsspannungen der Lichtquelle für eine jeweilige Leuchtfunktion unterscheiden sich relativ zueinander.

## Patentansprüche

1. Leuchtenanordnung in Form eines Bi-Halogen-Scheinwerfers für ein Kraftfahrzeug zum Erzeugen von Abblendlicht und Fernlicht aus einer einzigen Lichtquelle (2), wobei die Lichtquelle (2) als Halogenglühlampe ausgebildet ist, die nur eine Glühwendel besitzt, **dadurch gekennzeichnet, dass** die Halogenglühlampe zum Erzeugen des Abblendlichts eine gegenüber einer Standardbetriebsspannung von 13,2 V oder 28 V der Halogenglühlampe um 5% bis 10% reduzierte Betriebsspannung und zum Erzeugen des Fernlichts eine gegenüber der vorgenannten Standardbetriebsspannung um 5% bis 10% erhöhte Betriebsspannung hat oder
die Halogenglühlampe zum Erzeugen des Abblendlichts eine gegenüber einer Standardbetriebsspannung von 13,2 V oder 28 V der Halogenglühlampe um 5% bis 10% erhöhte Betriebsspannung und zum Erzeugen des Fernlichts eine gegenüber der vorgenannten Standardbetriebsspannung um 5% bis 10% reduzierte Betriebsspannung hat.

2. Leuchtenanordnung nach Anspruch 1, wobei eine bewegbare Blende (8) vorgesehen ist, die zum Umschalten von Abblend- und Fernlicht aus einem von der Lichtquelle (2) erzeugten Lichtgang hinein- oder hinausbewegbar ist.

## Claims

1. Luminaire arrangement in the form of a bihalogen headlight for a motor vehicle for generating dipped beam and main beam from a a single light source (2), wherein the light source (2) is embodied as a halogen incandescent lamp having only one incandescent element, **characterized in that** the halogen incandescent lamp, for generating the dipped beam, has an operating voltage reduced by 5% to 10% relative to a standard operating voltage of 13.2 V or 28 V of the halogen incandescent lamp and, for generating the main beam, has an operating voltage increased by 5% to 10% relative to the abovementioned standard operating voltage, or
the halogen incandescent lamp, for generating the dipped beam, has an operating voltage increased by 5% to 10% relative to a standard operating voltage of 13.2 V or 28 V of the halogen incandescent lamp and, for generating the main beam, has an operating voltage reduced by 5% to 10% relative to the abovementioned standard operating voltage.

2. Luminaire arrangement according to Claim 1, wherein a movable diaphragm (8) is provided, which, for the purpose of switching over dipped beam and main beam, is movable into or out of a light path generated by the light source (2).

## Revendications

1. Dispositif d'éclairage en forme de phare bi-halogène pour un véhicule automobile pour générer un feu de croisement et un feu de route à partir d'une seule source de lumière (2), la source de lumière (2) étant réalisée en tant qu'ampoule halogène possédant un seul filament spiralé, **caractérisé en ce que** l'ampoule halogène a une tension de service réduite de 5% à 10% par rapport à une tension de service standard de 13,2 V ou de 28 V de l'ampoule halogène pour générer le feu de croisement et une tension de service augmentée de 5% à 10% par rapport à ladite tension de service standard pour générer le feu de route ou **en ce que** l'ampoule halogène a une tension de service augmentée de 5% à 10% par rapport à une tension de service standard de 13,2 V ou de 28 V de l'ampoule halogène pour générer le feu de croisement et une tension de service réduite de 5% à 10% par rapport à ladite tension de service standard pour générer le feu de route.

2. Dispositif d'éclairage selon la revendication 1, un diaphragme mobile (8) étant prévu pour entrer dans et sortir d'une trajectoire lumineuse produite par la source de lumière (2) pour commuter entre feu de croisement et feu de route.
